# EUROPEAN PATENT SPECIFICATION

(11) **EP 3 039 853 B1**
(45) Date of publication and mention of the grant of the patent: **07.08.2019**
(21) Application number: 13753436.8
(22) Date of filing: 29.08.2013
(51) Int. Cl.: H04N 5/222, H04N 5/275, G06T 1/00, G06T 5/50, H04N 1/00

(54) **A METHOD AND AN APPARATUS FOR OBTAINING AN IMAGE FILE INCLUDING AN ALPHA CHANNEL WITH A PHOTOGRAPHIC CAMERA**
VERFAHREN UND VORRICHTUNG ZUR ERZEUGUNG EINER BILDDATEI MIT EINEM ALPHAKANAL MIT EINER FOTOKAMERA
PROCÉDÉ ET APPAREIL D'OBTENTION D'UN FICHIER D'IMAGE À CANAL ALPHA À L'AIDE D'UN APPAREIL PHOTO

(43) Date of publication of application: 06.07.2016
(73) Proprietor: Retails Design & Experts GmbH, 04109 Leipzig (DE)
(72) Inventor: ROJAHN, Anna, 10557 Berlin (DE); ACHINGER, Till, 10961 Berlin (DE); FABRITIUS, Gregor, 10405 Berlin (DE)
(74) Representative: Weihrauch, Frank
(86) International application number: PCT/EP2013/067873
(87) International publication number: WO 2015/028061

(56) References cited:
- WO-A1-2012/149983
- DE-A1-102012 002 398
- US-A1- 2003 085 907
- US-A1- 2011 096 183

## Description

The invention relates to a method and an apparatus for obtaining an image file including an alpha channel using a photographic camera.

The invention further relates to a holding device for a photographic camera that can be used in a method and/or an apparatus for obtaining an image file including an alpha channel.

Methods and apparatuses for obtaining image files including an alpha channel are used in particular in commercial photography, and specifically in advertising photography of products, for example to be displayed on a website of an online store.

Different techniques have been developed to differentiate between foreground and background in an image, i.e. to identify the part of an image relating to an object or product on the one hand and the background against which the image of the object or product was photographed on the other hand. Preferably, the background of the image is eliminated or rendered transparent such that the object or product can be placed in front of an arbitrary or desired background. This process of combining an image of an object with a background can be referred to alpha compositing, in which an alpha channel stores transparency information for each pixel in an image.

Examples of existing techniques include chroma keying methods as described in DE 10 2010 014 733 A1 or "color invariant chroma keying and colors spill neutralization for dynamic scenes and cameras" by Anselm Grundhöfer, Daniel Kurz, Sebastian Thiele, Oliver Bimber in VIS COMPUT (2010) 26: 1167-1176, and further techniques as described in US 2011/0242334 A1, US 2003/0085907 A1, US 6,301,382 B1, US 6,490,006 B1 "image-based 3D photography using opacity hulls" by Matusik et al. in Proceedings of SIGGRAPH 2002, US 2003/0035061 A1, US 2011/0096183 A1, GB 2321814 A, the free mask solution of Schoepe in Schellerten, Germany, WO 2012/149983, US 6,490,006 B1, US 6,377,269 B1, US 2006/0008171 A1, US 7,931,380 B2, GB 2464742 A, CA 2,280,481 A1, JP 2000/69498 A, and US 7,071,953 B2. DE102012002398A1 describes a method which involves recording an illuminated image motif in an unchanged position by a digital camera from an unchanged camera position before a variable background. Change of a background color is produced mechanically by a colored substance and a paper, electronically by a light, a monitor, and a TV with a colored image or by a luminescent surface with variable luminous paints. A produced image material is data technically processed in a terminal such that image information of both digital photos is subtracted for creating a mask.

However, continuous improvements are sought to improve the results and to reduce the time and effort necessary.

It is therefore an object of the present invention to provide for an improved method and apparatus for obtaining an image file including an alpha channel using a photographic camera. It is further an object of the present invention to provide for a method and an apparatus for obtaining an image file including an alpha channel using a photographic camera, which are suitable to produce improved results and to reduce the time and effort necessary to produce those results. Further, it is an object of the present invention to provide for an improved holding device for a photographic camera which can be used in particular with the method and apparatus for obtaining an image file including an alpha channel using a photographic camera described herein.

According to a first aspect of the invention, a method for obtaining an image file including an alpha channel according to claim 1 is provided.

The inventive method in a first stage creates information that is stored in an alpha channel related to the transparency of an object, i.e. in particular the information whether a pixel in an image relates to an object/foreground or to the background. The first transparency value means 100 % transparency, i.e. a pixel with the first transparency value belongs to the background. The second transparency value or transparency values between the first and second transparency value indicate that a pixel is partly or not transparent. In particular, the second transparency value indicates a non-transparent pixel, i.e. a pixel belonging to a non-transparent foreground or object. Transparency values between the first and second transparency value indicate that the object is partly transparent in the region of the respective pixel. For example, if the object is a glass, a bottle or another object through which the background can be seen at least partly, transparency values between the first and second transparency value will be created. The closer the transparency value is to the second transparency value, the less transparent is the respective part of the object and vice versa.

For example, the transparency values can be chosen between 0 and 1, with first and second transparency values being at the ends of the range. In particular, the first transparency value can be 0 and the second transparency value can be 1. However, if the method further comprises the inversion of transparency values, it can be preferred that the first transparency value is 1 and the second transparency value is 0. Values of 0 and 1 and in the range in between are preferably used represent the differences between the first and second images. However, other values and ranges can be used for the same purpose.

The transparency values are created by obtaining two different images of an object with the photographic camera, wherein the two images differ in the illumination of the background against which the object is photographed. The background is illuminated in a first color when the first image is taken and illuminated in a second color when the second image is taken. Preferably, the first and second colors have a high difference between their respective RGB values. It is particularly preferred to use complementary colors as first and second colors. However, also black and white could be used as first and second colors.

After the two images with the two different background colors are taken with the photographic camera, the RGB values of the pixels in the first image are compared to the RGB values of the respective pixels in the second image. A maximum difference preferably is determined by the difference between the first and second color in RGB values and/or can be a predetermined value, which is preferably adaptable by user input.

By matching a maximum difference, in particular the following is meant: If the difference of the RGB values of the two images for a certain pixel equals the maximum difference or deviates from this maximum difference only by a certain, preferably predefined, amount, this pixel is considered to belong to the background since its color changed with the color change of the background illumination.

If the difference in RGB values for the two images of a certain pixel differs from the maximum or predetermined difference in RGB values determined by the difference between the first and second color, or deviates more by than the certain amount, this pixel does not belong to the background but rather belongs to the foreground. If there is no difference in RGB values between the two images for a certain pixel or if the difference is in a certain, predefined range, this pixel is considered to belong to the object or foreground and is not transparent since its RGB value is independent from the background illumination. Pixels with a difference in RGB values in the two images that do not fulfill the requirements of being classified as transparent or non-transparent, are considered to belong to a part of the object that is partly transparent. In this way, for each of the pixels a transparency value is created.

According to the inventive method, besides the two images taken with differently illuminated background for creating the transparency information for the alpha channel, in a second stage a further, separate image of the object placed on the platform is taken with the photographic camera. This separate image is different from the first and the second image and in particular is not used to create the transparency values, i.e. is not used to create the alpha channel information. Therefore, for taking the separate image no restrictions regarding illumination and lighting of the object and/or the background, which are relevant for taking images that are used for creating alpha channel information, apply to this separate image. In particular, the separate image can be taken without a colored background illumination and the lighting of the object can be optimized for obtaining a realistic and/or advantageous image of the object.

According to the invention, an image file is then created based on said separate image and including the alpha channel information with the transparency values that have been created using the first two images. In other words, different images are used for creating the alpha channel information and for actually representing the object together with the alpha channel information. In this way, the first two images used for creating the alpha channel information can be optimized regarding background lighting to obtain optimized alpha channel information. At the same time, the separate image can be optimized regarding representation of the object. By applying the alpha channel information created from the first two images to the separate image, the image file contains an optimized representation of the object together with the optimized transparency values contained in the alpha channel.

The sequence in which the first and second and separate image are taken can be varied: For example, the separate image can be taken after the first and second image are taken, before the first and second images are taken or the separate image can be taken in between the first and second images. In particular, more than the two first and second images can be taken and used to obtain transparency values for the alpha channel. In particular, three, four or more of those images with different background illumination can be used to create the alpha channel information. Further, also more than one separate image can be taken and combined with the alpha channel information created from the first and second or more images with different background illumination. The separate images can be used to create an optimized separate image and obtain an image file with this optimized separate image together with the alpha channel information. Also, each of several separate images can be combined with the alpha channel information to form a respective number of several image files, each containing one of the separate images together with the alpha channel information. In this way, for example different lighting situations (e. g. relating to different moods or settings) can be used for taking the separate images and each of those separate images then are combined with the alpha channel information into a respective image file such that differently lighted representations of the object are obtained.

Preferably, the background is illuminated by a display, which preferably contains a plurality of LEDs. The display is arranged preferably beneath and behind the platform, in particular in a substantially horizontal plane below the platform and in an essentially vertical plane behind the platform. It is particularly preferred that the substantially horizontal display and the substantially vertical display are connected by an angled or curved display. In this way, a continuous background illumination can be achieved. In particular, it is preferred that light intensity and/or brightness of the illumination of the background is identical or at least very similar for the two colors used as background illumination for the two images.

The platform preferably is a transparent platform and can be made for example of acrylic glass. Further, it is preferred that the platform is matted to reduce reflections. In particular, it is preferred that the platform has a round, oval, elliptic or otherwise curved cross section. Further, it is preferred that an edge of the platform facing the display for background illumination has a chamfer or bevel to reduce reflections.

The photographic camera focusing an object placed on the platform is preferably accommodated on a frame, which further preferably also accommodates the platform and the display for background illumination. Further, it is preferred that the photographic camera is held by a holding device described below.

The steps for creating the transparency values and alpha channel information and/or the image file are preferably performed by a processing unit connected to the photographic camera. Preferably, a control unit connected to the photographic camera and to the display is used to synchronize the illumination of the background with the taking of the images such that the first and second images are taken with the correct background illumination and the separate image is taken with a correct, preferably optimized, lighting.

Further, a method for obtaining an image file including an alpha channel is described, the method comprising the steps: placing an object on a surface of a platform; illuminating a background of an object placed on the platform in a first color; taking a first image of an object placed on the platform with a photographic camera; illuminating a background of an object placed on the platform in a second color that is different from the first color; taking a second image of an object placed on the platform with the photographic camera; creating transparency values between a first transparency value for a transparent pixel and a second transparency value for a non-transparent pixel from said first and second images; wherein a pixel has the first transparency value, when a difference between an RGB value of a pixel in said first image and an RGB value of a corresponding pixel in said second image matches a maximum difference between RGB values of the pixels in said first image and the corresponding pixels in said second image; wherein a pixel has the second transparency value, when a difference between an RGB value of a pixel in said first image and an RGB value of a corresponding pixel in said second image is smaller than a maximum difference between the pixels in said first image of the plurality of images and the corresponding pixels in said second image of the plurality of images; preferably comprising the steps taking a separate image with the photographic camera of an object placed on the platform different from said first and the second image, and creating an image file including an alpha channel based on said separate image and the transparency values obtained from said first and second images; and further comprising the steps: rotating one or both of the photographic camera and the platform relative to the other about a rotation axis between sets of images taken by the photographic camera; a set of images comprising said first and second image and, preferably, said separate image file including an alpha channel:
According to this further method, more than one image file is created by repeating the process of taking first and second images and creating transparency values from those first and second images at least once after rotating the photographic camera relative to the platform, the platform relative to the photographic camera, or both. In this way, the object or product will be represented from different angles. For creating an image file, a set of images is used. As a minimum, such a set of images contains the first and second image with the different background colors from which the alpha channel information is obtained. If no separate image is taken in the set of images, the image file is created using the first or the second or a combination of the first and second image together with the alpha channel information. If, as described with reference to the first aspect of the invention, a separate image is taken and is part of the set of images, the image file is created by combining the separate image with the alpha channel information created using the first two images. An image file is created for each such set of images.

It is preferred that the platform is rotatable by a rotating mechanism relative to the camera. Preferably, the rotation axis for rotating the platform is arranged vertically. The relative rotation between the photographic camera and the platform between two sets of images is preferably predetermined; in particular, it is preferred that the platform is rotated by a predetermined amount about the vertical rotation axis relative to the photographic camera.

It is particularly preferred that the method comprises the steps rotating the platform relative to the photographic camera and to a display about a vertical rotation axis by 10 degrees between each of a plurality of sets, in particular a total of 36 sets, of images taken by the photographic camera; a set of images comprising a first and a second image and a separate image; wherein for each of the plurality of sets of images an image file including an alpha channel is created based on said separate image and the transparency values obtained from said first and second images of the respective set of images. Such a plurality of sets of images is particularly preferred to obtain a 360° representation of an object for example for product presentation on web pages by creating an image file for every 10°.

Further, it is particularly preferred that the method comprises the step illuminating an object placed on the platform by a lighting device, preferably including a flash-unit, while the separate image of an object placed on the platform is taken with the photographic camera.

To optimize the representation of the object in the separate image, a lighting device is used to light the object. Preferably, a flash unit can be used to create an optimized lighting of the object. It is further preferred that the display is deactivated or illuminated in a neutral color when the separate image is taken.

It is further preferred to move the photographic camera relative to the platform between sets of images taken by the photographic camera; a set of images comprising said first and second image and, preferably, said separate image. The movement of the photographic camera can be a movement along a straight line or a curve. For example, the camera can be moved closer to the object or further away from the object. Another example is to move the camera into a position vertically above the object to take images from above the object. Further, the camera is preferably brought into different positions relative to the object to take images of the object from different angles.

In a further preferred embodiment the method comprises the step rotating the photographic camera relative to the platform about a rotation axis, preferably about a horizontal rotation axis, between sets of images taken by the photographic camera; a set of images comprising said first and second image and, preferably, said separate image.

In addition or alternative to rotating the platform about a vertical rotation axis, it is preferred to rotate the photographic camera relative to the platform in order to create images of an object from different angles. Preferably, the photographic camera can be rotated about a horizontal rotation axis, which preferably intersects the centre of the platform or the centre of the object.

It is particularly preferred that the photographic camera can be moved in a plurality of directions and along a plurality of (straight or curved) lines in a guided, predetermined and/or controlled way to increase the options for representing the object by images taken from different angles.

Regarding the creation of the alpha channel information, it is particularly preferred that the method comprises the step inverting the transparency values by subtracting the transparency value from 1, such that an inverted value of 1 defines a foreground, preferably an object, and an inverted value of 0 defines a background. It is further preferred that the method comprises the step exponentiating the transparency values or the inverted transparency values by a positive integer lager than 1, preferably by 2. A further preferred embodiment comprises the step normalizing the exponentiated transparency values or the exponentiated inverted transparency onto a scale between 0 and 1. The previous embodiments regarding normalization, exponentiation, and inversion are particularly preferred with first and second transparency values between 0 and 1. However, normalization and inversion can also be applied for different representations of transparency with different value ranges.

Further, in a preferred embodiment the method comprises the steps changing all (preferably inverted and/or normalized) transparency values below a lower threshold value to the first transparency value and/or changing all (preferably inverted and/or normalized) transparency values above an upper threshold value to the second transparency value.

The application of those threshold values has the advantage to allow for small deviations on one or both of the two ends of the transparency spectrum and to still clearly identify a pixel as belonging to the background or the foreground, respectively. In particular, it is preferred that a user can determine the threshold value or that predetermined threshold values are stored, in particular relating to different basic conditions. Such predetermined threshold values preferably are adaptable by user input.

In a further preferred embodiment, the method comprises the steps identifying a reference pixel in said first and/or second image belonging to the background; identifying all pixels in said first and/or second image as background pixels, which have a difference in RGB value deviating in a predefined range from the difference in RGB value between the reference pixel and a corresponding pixel in the other one of said first and/or second image, and which are adjacent to the reference pixel and/or adjacent to another pixel with the a difference in RGB value deviating in a predefined range from the difference in RGB value between the reference pixel and a corresponding pixel in the other one of said first and/or second image.

In this embodiment, starting from a reference pixel, adjacent pixels to this reference pixel are identified that are all belonging to a background. This embodiment is particularly preferred for highly transparent objects or objects with highly transparent parts. In those highly transparent parts the difference in RGB values can be as high as the difference in RGB values that relates to the background. However, those pixels still belong to the object, albeit a transparent part of the object. Therefore, by identifying a reference pixel belonging to the background and only identifying additional pixels as belonging to the background that are adjacent to the reference pixel or one or more further pixels adjacent to the reference pixel that have a very similar difference in RGB values (within the predefined range) creates a definition of the background that contains pixels surrounding the object, only. The predefined range can be 0, i.e. only identifying background pixels with the same difference, or the predefined range can be +/- 10%, +/- 7,5%, +/- 5%, +/- 2,5%, +/- 2%, +/- 1,5%, +/- 1%, or +/-0,5% of the difference value of the reference pixel.

This method is particularly preferred for objects having clear edges or borders and highly transparent parts only in inner areas. For example, when an image is created of a bottle or a glass, the centre of the bottle or glass can be highly transparent, whereas the rim can be clearly identified as belonging to the object. By identifying a reference pixel belonging to the background and further performing the above-mentioned step of identifying further background pixels, only pixels surrounding the glass or bottle are identified as background, whereas all pixels within the bottle or glass are identified as belonging to the foreground, albeit with a high transparency value.

According to a further aspect of the invention, an apparatus for obtaining an image file including an alpha channel according to claim 11 is provided.

Further, an apparatus for obtaining an image file including an alpha channel is described, comprising a platform providing a surface for an object; a photographic camera focusing an object placed on the platform; a display adapted to illuminate a background of an object placed on the platform in at least two different colors; a processing unit connected to the photographic camera; a control unit connected to the photographic camera and to the display; the control unit being adapted to synchronize taking images of an object placed on the platform with the photographic camera with the illumination of the background by the display such that a first image of an object placed on the platform is taken by the photographic camera with the background illuminated in the first of the at least two different colors and a second image is taken by the photographic camera with the background illuminated in the second of the at least two different colors; the processing unit being adapted to create transparency values between a first transparency value for a transparent pixel and a second transparency value for a non-transparent pixel from said first and second images; wherein a pixel has the first transparency value, when a difference between an RGB value of a pixel in said first image and an RGB value of a corresponding pixel in said second image matches a maximum difference between RGB values of the pixels in said first image and the corresponding pixels in said second image; wherein a pixel has the second transparency value, when a difference between an RGB value of a pixel in said first image and an RGB value of a corresponding pixel in said second image is smaller than a maximum difference between the pixels in said first image of the plurality of images and the corresponding pixels in said second image of the plurality of images; wherein preferably the control unit is adapted to initiate taking a separate image with the photographic camera of an object placed on the platform different from said first and the second image; and the processing unit preferably is adapted to create an image file including an alpha channel based on said separate image and the transparency values obtained from said first and second images; and wherein one or both of the photographic camera and the platform being rotatable relative to the other by a rotating mechanism about a rotation axis; and wherein the rotating mechanism is connected to the control unit and the control unit is adapted to initiate a relative rotation between the photographic camera and the platform between sets of images taken by the photographic camera; a set of images comprising said first and second image and, preferably, said separate image file including an alpha channel.

The apparatus according to the previous aspects can be further improved by a lighting device, preferably including a flash-unit, to illuminate an object placed on the platform, the lighting device being connected to the control unit; and wherein the control unit is adapted to synchronize taking the separate image of an object placed on the platform with the photographic camera with an illumination by the lighting device.

Further, the apparatus can be improved by a holding device for the photographic camera comprising a rotating frame being mounted on a support rotatable about a frame rotation axis, wherein the support is mounted on a base element rotatable about a support rotation axis which is orthogonal to the frame rotation axis; and wherein a fixture of the rotating frame is adapted to accommodate a photographic camera with an optical axis of a lens of the photographic camera being identical to the frame rotation axis.

As to the advantages, preferred embodiments and details of the apparatuses and preferred embodiments, reference is made to the corresponding aspects and embodiments described regarding the methods above and regarding the holding device in the following.

Further, a holding device for a photographic camera is described comprising a rotating frame being mounted on a support rotatable about a frame rotation axis, wherein the support is mounted on a base element rotatable about a support rotation axis which is orthogonal to the frame rotation axis; and wherein a fixture of the rotating frame is adapted to accommodate a photographic camera with an optical axis of a lens of the photographic camera being identical to the frame rotation axis.

Preferably, the holding device is particularly suitable to be used in an apparatus and in a method described above.

The holding device is adapted to accommodate the photographic camera such that a rotation of the rotating frame leads to a rotation of the photographic camera about its optical axis. This is particularly advantageous for changing the camera orientation between landscape and portrait format while focusing the same object. To achieve this, the frame rotation axis is identical with the optical axis of a lens of a photographic camera. Since photographic cameras can vary in their dimensions, the rotating frame contains a fixture to accommodate the photographic camera.

Preferably, the fixture is adapted to accommodate the photographic camera in different positions along a first adjustment direction in a plane perpendicular to the frame rotation axis and/or along a second adjustment direction perpendicular to the first adjustment direction and in a plane perpendicular to the frame rotation axis. In this way, the photographic camera can be placed in a rotating frame according to its specific dimensions such that its optical axis is identical with the frame rotation axis.

It is particularly preferable that the rotating frame is a ring and the frame rotation axis intersects the centre of the ring. Further, it is preferred that an inner perimeter of the ring has a flattened section and the fixture is arranged on the flattened section. This embodiment of the rotating frame is particularly advantageous for an easy handling of the holding device and particularly an easy fastening and arranging of a photographic camera to the fixture and to adapt the position of the photographic camera such that its optical axis is identical to the frame rotation axis.

Preferred embodiments of the invention shall now be described with reference to the attached drawings, in which
- Fig. 1:: shows a cross-section of an example of a preferred embodiment of an apparatus according to the invention;
- Fig. 2:: shows a top view of the apparatus according to Fig. 1;
- Fig. 3:: shows a schematic view of different elements of the apparatus according to Fig. 1;
- Fig. 4:: shows a schematic flow diagram of some steps of an example of an embodiment of the inventive method;
- Fig. 5:: shows a schematic view of a first and second and a separate image for use in the method according to the invention;
- Fig. 6:: shows an example of an embodiment of a holding device; and
- Fig. 7:: shows a detail of the holding device according to Fig. 6 with a photographic camera.

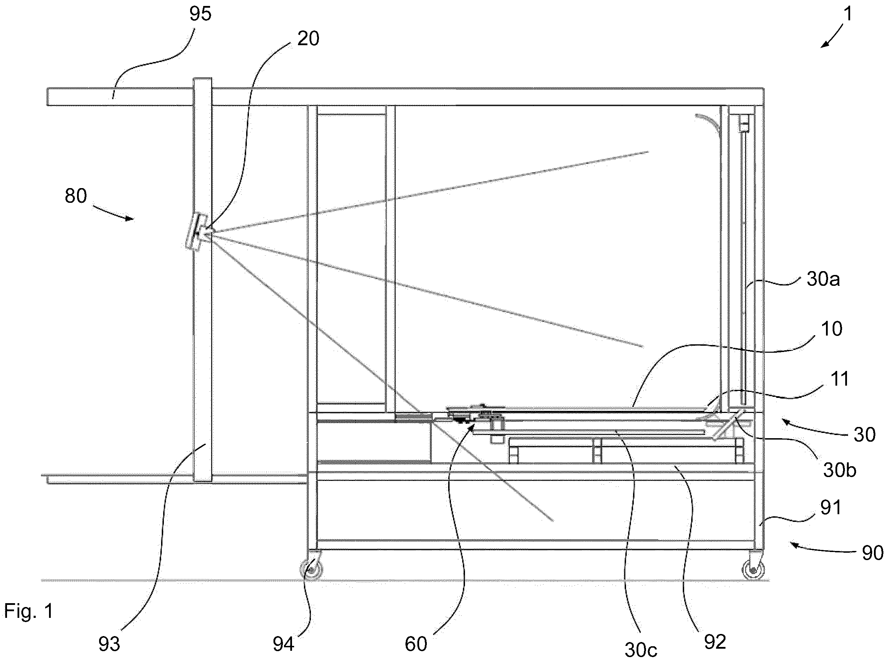

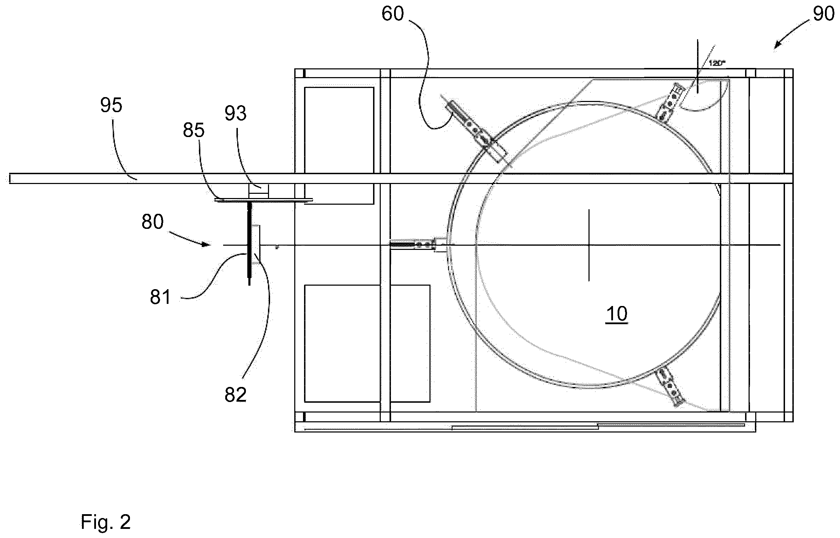

In figures 1 and 2, an example of a preferred embodiment of an apparatus 1 for obtaining an image file including an alpha channel is depicted. The apparatus 1 comprises a platform 10 in the form of a circle and having a 45° bevel or chamfer 11. Platform 10 is preferably made of matted acrylic glass and is transparent. Platform 10 is mounted rotatable about a vertical rotation axis and can be rotated by a rotating mechanism 60. Platform 10 provides a surface for an object that is focused by a photographic camera 20.

Photographic camera 20 is mounted on a frame 90. In the embodiment depicted in figures 1 and 2, frame 90 is placed on wheels 94 and thus renders the apparatus 1 mobile. Frame 90 comprises vertical elements 91, 93 and horizontal elements 92, 95. Photographic camera 20 is mounted on vertical element 93 via a holding device 80.

The apparatus 1 comprises a display 30 adapted to illuminate a background of an object placed on platform 10 in at least two different colors. In the embodiment of the apparatus 1 depicted in figures 1 and 2, the display 30 comprises three parts: a horizontal part 30c arranged below platform 10, a vertical part 30a arranged behind platform 10 and an angled part 30b arranged between parts 30a, c. Preferably, all parts 30a, b, c of display 30 comprise a plurality of LEDs. Further, it is preferred that a part of frame 90, in particular a horizontal element 92, accommodating the horizontal part 30c and/or angled part 30b is constructed as a sliding table or drawer to provide easy access to the display. In addition, it is preferred that the angled part 30b can be moved between an angled position to a horizontal position, wherein the horizontal position facilitates movement of the sliding table or drawer and the angled position improves background illumination.

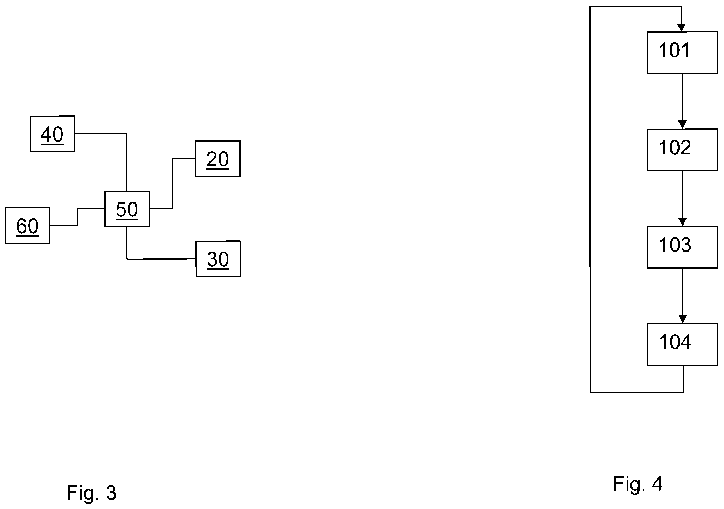

As depicted in Fig. 3, the photographic camera 20, the display 30, the rotating mechanism 60, and a processing unit 40 are all connected to a control unit 50. The processing unit 40 can additionally or alternatively be connected to the photographic camera 20. The control unit 50 is adapted to synchronize taking images of an object placed on the platform 10 with the photographic camera 20 with the illumination of the background by the display 30. The processing unit 40 is adapted to create the transparency values.

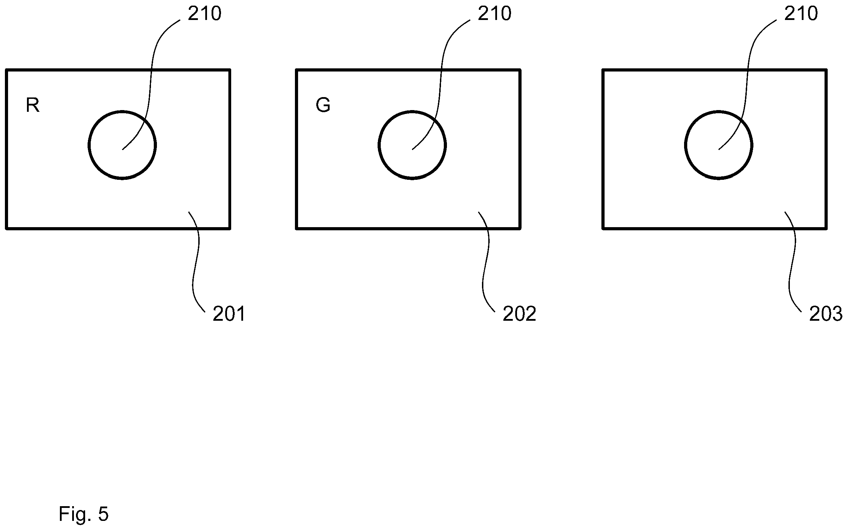

In figures 4 and 5, the taking of a set of images is schematically depicted. Fig. 5 depicts a set of images 201, 202, 203. The first image 201 of an object 210 (in Fig. 5 depicted as a round circle) is taken with the photographic camera 20 while the display 30 illuminated the background of the object in red. The second image 202 of the object 210 is taken with the photographic camera 20 while the display 30 illuminated the background of the object in green. Further, a separate image 203 without a background illumination but with an optimized lighting of object 210 has been taken. This set of images 201, 202, 203, is then used to create the image file including an alpha channel.

As depicted in Fig. 4, in a first step 101 the first image 201 of the object 210 is taken with the background illuminated in red. In step 102 the second image 202 of the object 210 is taken with the background illuminated in green. In step 103 the separate image 203 of object 210 is taken without a background illumination but an optimized lighting of the object 210. After the taking of the set of images 201, 202, 203 in steps 101, 102, 103, rotating mechanism 60 is activated by control unit 50 and platform 10 is rotated in step 104 about a vertical rotation axis by 10°. After this rotation, the next set of images is taken by repeating steps 101, 102, 103. Subsequently, in a repetition of step 104, platform 10 is again rotated by rotating mechanism 60 by 10°. After 36 repetitions, control unit 50 ends the process of taking sets of pictures. In steps 101 and 102, control unit 50 synchronizes the display 30 and the photographic camera 20 such that the first image 201 of the object 210 is taken by the photographic camera 20 with the background illuminated in the first color and the second image 202 is taken by the photographic camera 20 with the background illuminated in the second color.

After one or a plurality of sets of images 201, 202, 203 is taken, the information relating to those images is transferred to the processing unit 40 from the photographic camera and/or from control unit 50. Processing unit 40 then created transparency values between the first transparency value for a transparent pixel and the second transparency value for a non-transparent pixel from said first and second images 201, 202 as described above. Further, processing unit 40 then creates an image file including alpha channel based on the separate image 203 and the transparency values obtained from first and second images 201 and 202.

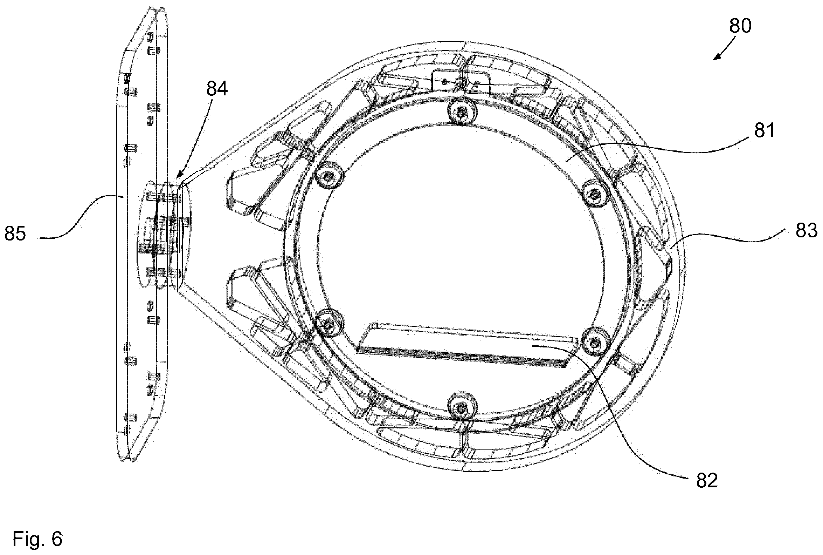

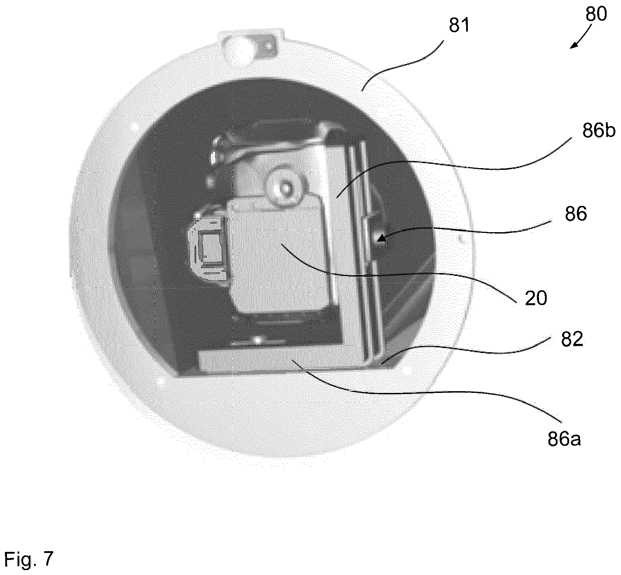

In figures 6 and 7, an example of a preferred embodiment of a holding device 80 of a photographic camera 20 is depicted. Holding device 80 comprises a rotating frame 81 wherein the inner perimeter has a flattened section 82. In Fig. 7, a fixture 86 with two perpendicular legs 86a, b is arranged on a flattened section 82 of the rotating frame 81. Further, in Fig. 7 a photographic camera 20 is depicted, which is mounted on fixture 86. Fixture 86 is adapted to accommodate the photographic camera 20 in different positions along a first adjustment direction along leg 86a in a plane perpendicular to the frame rotation axis and along a second adjustment direction along leg 86b perpendicular to the first adjustment direction and in a plane perpendicular to the frame rotation axis.

As can be seen in figures 6 and 7, the rotating frame 81 is a ring and the frame rotation axis intersects the centre of this ring. Further, rotating frame 80 is mounted on a support 83 and is rotatable about the frame rotation axis relative to the support 83. The support 83 is mounted on a base element 85 rotatable about a support rotation axis. In Fig. 7, the support rotation axis is horizontal and intersects pivot joint 84 in its centre. Alternatively, the support rotation axis can also be horizontal, but located above the holding device 80 such that the support 83 can be pivoted along a segment of a circle. Further, the support can comprise two perpendicular support sections. The support can further comprise a handle to facilitate a pivoting or rotating movement of the support 83 relative to the base element 85. Support 83 can be fixed relative to base element 85 via fasteners.

In this way, the photographic camera 20 can be rotated about the optical axis of its lens by rotating the rotating frame about the frame rotation axis, which is identical with the optical axis. The rotation of the support about the support rotation axis further provides for an additional movement of the photographic camera to focus an object placed on a platform. In particular, the holding device 80 allows for an easy and reproducible change between landscape and portrait orientation of the photographic camera.

## Claims

1. A method for obtaining an image file including an alpha channel, the method comprising the steps:
- placing an object on a surface of a transparent platform (10) with a round, oval, elliptic or otherwise curved cross section;
- illuminating a background of the object placed on the platform (10) in a first color by a display (30), which preferably contains a plurality of LEDs and which has display parts (30a,c) arranged beneath and behind the platform (10), connected by an angled or curved display part (30b) to achieve a continuous background illumination;
- taking a first image (201) of the object placed (210) on the platform (10) with a photographic camera (20);
- illuminating a background of the object placed on the platform (10) in a second color that is different from the first color by the display (30),;
- taking a second image (202) of the object placed on the platform (10) with the photographic camera (20);
- creating transparency values between a first transparency value for a transparent pixel and a second transparency value for a non-transparent pixel from said first and second images (201, 202);
- wherein a pixel has the first transparency value, when a difference between an RGB value of a pixel in said first image (201) and an RGB value of a corresponding pixel in said second image (202) matches a maximum difference between RGB values of the pixels in said first image (201) and the corresponding pixels in said second image (202);
- wherein a pixel has the second transparency value, when a difference between an RGB value of a pixel in said first image (201) and an RGB value of a corresponding pixel in said second image (202) is smaller than a maximum difference between the pixels in said first image (201) and the corresponding pixels in said second image (202) and is zero or in a certain, predefined range;
- taking a separate image (203) with the photographic camera (20) of the object placed on the platform (10) different from said first and the second image (201, 202) and in which the lighting of the object is optimized for obtaining a realistic and/or advantageous image of the object; and
- creating an image file including an alpha channel based on said separate image (203) and the transparency values obtained from said first and second images (201, 202),
**characterized in that** the edge of the platform (10) facing the display (30) for background illumination has a chamfer or bevel (11) to reduce reflections.

2. A method according to the previous claim,
comprising the steps:
- rotating one or both of the photographic camera (20) and the platform (10) relative to the other about a rotation axis between sets of images taken by the photographic camera (20); a set of images comprising said first and second image (201, 202) and, preferably, said separate image (203).

3. A method according to at least one of claims 1 - 2,
comprising the steps:
- rotating the platform (10) relative to the photographic camera (20) and to a display (30) about a vertical rotation axis by 10 degrees between each of a plurality of sets of images taken by the photographic camera (20); a set of images comprising a first and a second image (201, 202) and a separate image (203);
- wherein for each of the plurality of sets of images an image file including an alpha channel is created based on said separate image (203) and the transparency values obtained from said first and second images (201, 202) of the respective set of images.

4. A method according to at least one of the previous claims, comprising the step:
- illuminating the object placed on the platform (10) by a lighting device, preferably including a flash-unit, while the separate image (203) of the object placed on the platform (10) is taken with the photographic camera (20).

5. A method according to at least one of the previous claims, comprising the step:
- Rotating the photographic camera (20) relative to the platform(10) about a rotation axis, preferably about a horizontal rotation axis, between sets of images taken by the photographic camera (20); a set of images comprising said first and second image (201, 202) and, preferably, said separate image (203).

6. A method according to at least one of the previous claims, comprising the step:
- inverting the transparency values by subtracting the transparency value from 1, such that an inverted value of 1 defines a foreground, preferably the object, and an inverted value of 0 defines a background.

7. A method according to the previous claim,
comprising the step:
- exponentiating the transparency values or the inverted transparency values by a positive integer larger than 1, preferably by 2.

8. A method according to the previous claim,
comprising the step:
- normalizing the exponentiated transparency values or the exponentiated inverted transparency onto a scale between 0 and 1.

9. A method according to at least one of the previous claims, comprising the steps:
- changing all transparency values below a lower threshold value to the first transparency value and/or
- changing all transparency values above an upper threshold value to the second transparency value.

10. A method according to at least one of the previous claims, comprising the steps:
- identifying a reference pixel in said first and/or second image (201, 202) belonging to the background;
- identifying all pixels in said first and/or second image (201, 202) as background pixels, which have a difference in RGB value deviating in a predefined range from the difference in RGB value between the reference pixel and a corresponding pixel in the other one of said first and/or second image (201, 202), and which are adjacent to the reference pixel and/or adjacent to another pixel with a difference in RGB value deviating in a predefined range from the difference in RGB value between the reference pixel and a corresponding pixel in the other one of said first and/or second image (201, 202).

11. An apparatus (1) for obtaining an image file including an alpha channel, comprising
- a transparent platform (10) with a round, oval, elliptic or otherwise curved cross section, providing a surface for an object;
- a photographic camera (20) focusing the object placed on the platform (10);
- a display (30) adapted to illuminate a background of the object placed on the platform (10) in at least two different colors by a display (30), which preferably contains a plurality of LEDs and which has display parts (30)a,c arranged beneath and behind the platform (10), connected by an angled or curved display part (30b) to achieve a continuous background illumination;
- a processing unit (40) connected to the photographic camera (20);
- a control unit (50) connected to the photographic camera (20) and to the display (30); the control unit being adapted to synchronize taking images of the object placed on the platform (10) with the photographic camera (20) with the illumination of the background by the display (30) such that a first image (201) of the object placed on the platform (10) is taken by the photographic camera (20) with the background illuminated in the first of the at least two different colors and a second image (202) is taken by the photographic camera (20) with the background illuminated in the second of the at least two different colors;
- the processing unit (40) being adapted to create transparency values between a first transparency value for a transparent pixel and a second transparency value for a non-transparent pixel from said first and second images (201, 202);
- wherein a pixel has the first transparency value, when a difference between an RGB value of a pixel in said first image (201) and an RGB value of a corresponding pixel in said second image (202) matches a maximum difference between RGB values of the pixels in said first image (201) and the corresponding pixels in said second image (202);
- wherein a pixel has the second transparency value, when a difference between an RGB value of a pixel in said first image (201) and an RGB value of a corresponding pixel in said second image (202) is smaller than a maximum difference between the pixels in said first image (201) and the corresponding pixels in said second image (202) and is zero or in a certain, predefined range;
- the control unit (50) being adapted to initiate taking a separate image (203) with the photographic camera (20) of the object placed on the platform (10) different from said first and the second image (202) and in which the lighting of the object is optimized for obtaining a realistic and/or advantageous image of the object; and
- the processing unit (40) being adapted to create an image file including an alpha channel based on said separate image (203) and the transparency values obtained from said first and second images (201, 202),
**characterized in that** the edge of the platform (10) facing the display (30) for background illumination has a chamfer or bevel (11) to reduce reflections.

12. An apparatus (1) according to the previous claim,
wherein one or both of the photographic camera (20) and the platform (10) being rotatable relative to the other by a rotating mechanism about a rotation axis; and wherein the rotating mechanism is connected to the control unit (50) and the control unit (50) is adapted to initiate a relative rotation between the photographic camera (20) and the platform (10) between sets of images taken by the photographic camera (20); a set of images comprising said first and second image (201, 202) and, preferably, said separate image (203).

13. An apparatus (1) according to at least one of the previous claims 11-12, comprising a lighting device, preferably including a flash-unit, to illuminate the object placed on the platform (10), the lighting device being connected to the control unit (50);
and wherein the control unit (50) is adapted to synchronize taking the separate image (203) of the object placed on the platform (10) with the photographic camera (20) with an illumination by the lighting device.

14. An apparatus (1) according to at least one of the previous claims 11-13, comprising a holding device (80) for the photographic camera (20) comprising a rotating frame (90) being mounted on a support rotatable about a frame rotation axis, wherein the support is mounted on a base element rotatable about a support rotation axis which is orthogonal to the frame rotation axis; and wherein a fixture of the rotating frame (90) is adapted to accommodate a photographic camera (20) with an optical axis of a lens of the photographic camera (20) being identical to the frame rotation axis.

## Patentansprüche

1. Verfahren zum Erhalt einer Bilddatei mit einem Alphakanal, umfassend folgende Verfahrensschritte:
- Anordnen eines Objekts auf einer Oberfläche einer transparenten Plattform (10) mit einem runden, ovalen, elliptischen oder anderweitig gebogenen Querschnitt;
- Beleuchten eines Hintergrunds des auf der Plattform (10) angeordneten Objekts in einer ersten Farbe durch ein Display (30), das vorzugsweise eine Vielzahl von LEDs enthält und unterhalb und hinter der Plattform (10) angeordnete Displayteile (30a, c) aufweist, die durch ein winkelförmiges oder gebogenes Displayteil (30b) verbunden sind, um eine kontinuierliche Hintergrundbeleuchtung zu erzielen;
- Aufnehmen eines ersten Bildes (201) des auf der Plattform (10) angeordneten Objekts (210) mit einer Fotokamera (20);
- Beleuchten eines Hintergrunds des auf der Plattform (10) angeordneten Objekts durch das Display (30) in einer sich von der ersten Farbe unterscheidenden zweiten Farbe;
- Aufnehmen eines zweiten Bildes (202) des auf der Plattform (10) angeordneten Objekts mit der Fotokamera (20);
- Erzeugen von Transparenzwerten zwischen einem ersten Transparenzwert für ein transparentes Pixel und einem zweiten Transparenzwert für ein nicht transparentes Pixel aus dem ersten und zweiten Bild (201, 202);
- wobei ein Pixel den ersten Transparenzwert aufweist, wenn eine Differenz zwischen einem RGB-Wert eines Pixels in dem ersten Bild (201) und einem RGB-Wert eines entsprechenden Pixels in dem zweiten Bild (202) einer maximalen Differenz zwischen RGB-Werten der Pixel in dem ersten Bild (201) und den entsprechenden Pixeln in dem zweiten Bild (202) entspricht;
- wobei ein Pixel den zweiten Transparenzwert aufweist, wenn eine Differenz zwischen einem RGB-Wert eines Pixels in dem ersten Bild (201) und einem RGB-Wert eines entsprechenden Pixels in dem zweiten Bild (202) kleiner als eine maximale Differenz zwischen den Pixeln in dem ersten Bild (201) und den entsprechenden Pixeln in dem zweiten Bild (202) ist und Null ist oder in einem bestimmten, vordefinierten Bereich liegt;
- Aufnehmen eines separaten Bildes (203) des auf der Plattform (10) angeordneten Objekts mit der Fotokamera (20), das sich von dem ersten und dem zweiten Bild (201, 202) unterscheidet und in dem die Beleuchtung des Objekts optimiert ist, um ein realistisches und/oder vorteilhaftes Bild des Objekts zu erhalten und
- Erzeugen einer Bilddatei mit einem Alphakanal basierend auf dem separaten Bild (203) und den aus dem ersten und zweiten Bild (201, 202) erhalten Transparenzwerten,
**dadurch gekennzeichnet, dass** die Kante der Plattform (10), die dem Display (30) für die Hintergrundbeleuchtung zugewandt ist, eine Schräge oder Fase (11) zur Reduzierung von Reflexionen aufweist.

2. Verfahren nach dem vorherigen Anspruch,
aufweisend die folgenden Verfahrensschritte:
- Drehen der Fotokamera (20) und/oder der Plattform (10) oder beider relativ zueinander um eine Drehachse zwischen den von der Fotokamera (20) aufgenommenen Bildsätzen; wobei ein Bildsatz das erste und zweite Bild (201, 202) und vorzugsweise das separate Bild (203) umfasst.

3. Verfahren nach mindestens einem der Ansprüche 1 bis 2,
aufweisend die folgenden Verfahrensschritte:
- Drehen der Plattform (10) relativ zur Fotokamera (20) und zu einem Display (30) um eine vertikale Drehachse um 10 Grad zwischen je einer Vielzahl von Bildsätzen, die von der Fotokamera (20) aufgenommen wurden; wobei ein Bildsatz ein erstes und ein zweites Bild (201, 202) und ein separates Bild (203) umfasst;
- wobei für jede Vielzahl von Bildsätzen eine Bilddatei mit einem Alphakanal basierend auf dem separaten Bild (203) und den aus dem ersten und zweiten Bild (201, 202) des jeweiligen Bildsatzes erhaltenen Transparenzwerten erzeugt wird.

4. Verfahren nach mindestens einem der vorhergehenden Ansprüche,
aufweisend den folgenden Verfahrensschritt:
- Beleuchten des auf der Plattform (10) angeordneten Objekts durch eine Beleuchtungsvorrichtung, die vorzugsweise eine Blitzeinheit enthält, während das separate Bild (203) des auf der Plattform (10) angeordneten Objekts mit der Fotokamera (20) aufgenommen wird.

5. Verfahren nach mindestens einem der vorhergehenden Ansprüche,
aufweisend den folgenden Verfahrensschritt:
- Drehen der Fotokamera (20) relativ zur Plattform (10) um eine Drehachse, vorzugsweise um eine horizontale Drehachse, zwischen den von der Fotokamera (20) aufgenommenen Bildsätzen; wobei ein Bildsatz, das erste und zweite Bild (201, 202) und vorzugsweise das separate Bild (203) umfasst.

6. Verfahren nach mindestens einem der vorhergehenden Ansprüche,
aufweisend den folgenden Verfahrensschritt:
- Invertieren der Transparenzwerte durch Subtrahieren des Transparenzwertes von 1 so, dass ein invertierter Wert von 1 einen Vordergrund, vorzugsweise das Objekt, und ein invertierter Wert von 0 einen Hintergrund definiert.

7. Verfahren nach dem vorherigen Anspruch,
aufweisend den folgenden Verfahrensschritt:
- Potenzieren der Transparenzwerte oder der invertierten Transparenzwerte mit einer positiven ganzen Zahl größer als 1, vorzugsweise mit 2.

8. Verfahren nach dem vorherigen Anspruch,
aufweisend den folgenden Verfahrensschritt:
- Normalisieren der potenzierten Transparenzwerte oder der potenzierten invertierten Transparenz auf einer Skala zwischen 0 und 1.

9. Verfahren nach mindestens einem der vorhergehenden Ansprüche,
aufweisend die folgenden Verfahrensschritte:
- Ändern aller Transparenzwerte unterhalb eines unteren Schwellenwerts auf den ersten Transparenzwert und/oder
- Ändern aller Transparenzwerte oberhalb eines oberen Schwellenwerts auf den zweiten Transparenzwert.

10. Verfahren nach mindestens einem der vorhergehenden Ansprüche,
aufweisend die folgenden Verfahrensschritte:
- Identifizieren eines Referenzpixels in dem ersten und/oder zweiten Bild (201, 202), das zum Hintergrund gehört;
- Identifizieren aller Pixel in dem ersten und/oder zweiten Bild (201, 202) als Hintergrundpixel, die eine Differenz im RGB-Wert aufweisen, die in einem vorbestimmten Bereich von der Differenz im RGB-Wert zwischen dem Referenzpixel und einem entsprechenden Pixel in dem jeweils anderen ersten und/oder zweiten Bild (201, 202) abweicht, und die an den Referenzpixel und/oder einen anderen Pixel mit einer Differenz im RGB-Wert angrenzen, die in einem vorbestimmten Bereich von der Differenz im RGB-Wert zwischen dem Referenzpixel und einem entsprechenden Pixel in dem jeweils anderen ersten und/oder zweiten Bild (201, 202) abweicht.

11. Vorrichtung (1) für den Erhalt einer Bilddatei mit einem Alphakanal, umfassend
- eine transparente Plattform (10) mit einem runden, ovalen, elliptischen oder anderweitig gebogenen Querschnitt, die eine Oberfläche für ein Objekt bildet;
- eine Fotokamera (20), die das auf der Plattform (10) angeordnete Objekt fokussiert;
- ein Display (30), ausgebildet einen Hintergrund des auf der Plattform (10) angeordneten Objekts in mindestens zwei verschiedenen Farben zu beleuchten, das vorzugsweise eine Vielzahl von LEDs enthält und Displayteile (30 a, c) aufweist, die unterhalb und hinter der Plattform (10) angeordnet und durch ein winkelförmiges oder gebogenes Displayteil (30b) verbunden sind, um eine kontinuierliche Hintergrundbeleuchtung zu erzielen;
- eine mit der Fotokamera (20) verbundene Verarbeitungseinheit (40);
- eine mit der Fotokamera (20) und dem Display (30) verbundene Steuereinheit (50); wobei die Steuereinheit ausgebildet ist, die Aufnahme von Bildern des auf der Plattform (10) angeordneten Objekts mit der Fotokamera (20) bei Beleuchtung des Hintergrunds durch das Display (30) so zu synchronisieren, dass ein erstes Bild (201) des auf der Plattform (10)angeordneten Objekts von der Fotokamera (20) aufgenommen wird, bei dem der Hintergrund in der ersten der mindestens zwei verschiedenen Farben beleuchtet ist, und ein zweites Bild (202) von der Fotokamera (20) aufgenommen wird, bei dem der Hintergrund in der zweiten der mindestens zwei verschiedenen Farben beleuchtet ist;
- die Verarbeitungseinheit (40), ausgebildet die Transparenzwerte zwischen einem ersten Transparenzwert für ein transparentes Pixel und einem zweiten Transparenzwert für ein nicht transparentes Pixel aus dem ersten und zweiten Bild (201, 202) zu erzeugen;
- wobei ein Pixel den ersten Transparenzwert aufweist, wenn eine Differenz zwischen einem RGB-Wert eines Pixels in dem ersten Bild (201) und einem RGB-Wert eines entsprechenden Pixels in dem zweiten Bild (202) einer maximalen Differenz zwischen RGB-Werten der Pixel in dem ersten Bild (201) und den entsprechenden Pixeln in dem zweiten Bild (202) entspricht;
- wobei ein Pixel den zweiten Transparenzwert aufweist, wenn eine Differenz zwischen einem RGB-Wert eines Pixels in dem ersten Bild (201) und einem RGB-Wert eines entsprechenden Pixels in dem zweiten Bild (202) kleiner als eine maximale Differenz zwischen den Pixeln in dem ersten Bild (201) und den entsprechenden Pixeln in dem zweiten Bild (202) ist und Null ist oder in einem bestimmten, vordefinierten Bereich liegt;
- die Steuereinheit (50), ausgebildet die Aufnahme eines separaten Bildes (203) des auf der Plattform (10) angeordneten Objekts mit der Fotokamera (20) zu initiieren, wobei sich dieses separate Bild (203) von dem ersten und zweiten Bild (202) unterscheidet und in ihm die Beleuchtung des Objekts optimiert ist, um ein realistisches und/oder vorteilhaftes Bild des Objekts zu erhalten und
- die Verarbeitungseinheit (40), ausgebildet eine Bilddatei mit einem Alphakanal basierend auf dem separaten Bild (203) und den aus dem ersten und zweiten Bild (201, 202) erhalten Transparenzwerten zu erzeugen,
**dadurch gekennzeichnet, dass** die Kante der Plattform (10), die dem Display (30) für die Hintergrundbeleuchtung zugewandt ist, eine Schräge oder Fase (11) zur Reduzierung von Reflexionen aufweist.

12. Vorrichtung (1) nach dem vorherigen Anspruch,
wobei die Fotokamera (20) und/oder die Plattform (10) oder beide durch einen Drehmechanismus relativ zueinander um eine Drehachse drehbar sind; und wobei der Drehmechanismus mit der Steuereinheit (50) verbunden ist und die Steuereinheit (50) eingestellt ist, eine relative Drehung zwischen der Fotokamera (20) und der Plattform(10) zwischen den von der Fotokamera (20) aufgenommenen Bildsätzen zu initiieren; wobei ein Bildsatz das erste und zweite Bild (201, 202) und vorzugsweise das separate Bild (203) umfasst.

13. Vorrichtung (1) gemäß mindestens einem der vorhergehenden Ansprüche 11 bis 12,
umfassend eine Beleuchtungsvorrichtung, vorzugsweise mit einer Blitzeinheit, für die Beleuchtung des auf der Plattform (10) angeordneten Objekts, wobei die Beleuchtungsvorrichtung mit der Steuereinheit (50) verbunden ist;
und wobei die Steuereinheit (50) ausgebildet ist, das Aufnehmen des separaten Bildes (203) des auf der Plattform (10) angeordneten Objekts mit der Fotokamera (20) mit einer durch die Beleuchtungsvorrichtung erzeugten Beleuchtung zu synchronisieren.

14. Vorrichtung (1) gemäß mindestens einem der vorhergehenden Ansprüche 11 bis 13,
umfassend eine Haltevorrichtung (80) für die Fotokamera (20), die einen Drehrahmen (90) ümfasst, der auf einem um eine Rahmendrehachse drehbaren Träger befestigt ist, wobei der Träger auf einem Grundelement montiert ist, das um eine orthogonal zur Rahmendrehachse verlaufende Trägerdrehachse drehbar ist; und wobei eine Halterung des Drehrahmens (90) ausgebildet ist eine Fotokamera (20) aufzunehmen und eine optische Achse einer Linse der Fotokamera (20) identisch mit der Rahmendrehachse ist.

## Revendications

1. Un procédé pour obtenir un fichier d'image comprenant un canal alpha, le procédé
comprenant les étapes de:
- placer un objet sur une surface d'une plate-forme transparente (10) avec une section transversale ronde, ovale, elliptique ou autrement courbée;
- éclairer un arrière-plan d'un objet placé sur la plate-forme (10) avec une première couleur par un écran (30), qui de préférence contient une pluralité des LEDs et qui contient des parties de l'écran (30a, c) disposées sous et derrière la plate-forme (10), connecté par une partie de l'écran angulaire ou courbée (30b) pour obtenir un éclairage continu de l'arrière-plan;
- prendre une première image (201) d'un objet placé (210) sur la plate-forme (10) avec un appareil photo (20);
- éclairer un arrière-plan d'un objet placé sur la plate-forme (10) avec une seconde couleur qui est différent de la première couleur par l'écran (30);
- prendre une seconde image (202) d'un objet placé sur la plate-forme (10) avec l'appareil photo (20);
- créer des valeurs de transparence entre une première valeur de transparence pour un pixel transparent et une seconde valeur de transparence pour un pixel non-transparent à partir desdites première et seconde images (201, 202);
- où un pixel a la première valeur de transparence, quand une différence entre une valeur RVB d'un pixel dans ladite première image (201) et une valeur RVB d'un pixel correspondant dans ladite seconde image (202) correspond à la différence maximale entre les valeurs RVB des pixels dans ladite première (201) et les pixels correspondants dans ladite seconde image (202);
- où un pixel a la deuxième valeur de transparence, quand une différence entre une valeur RVB d'un pixel dans ladite première image (201) et une valeur RVB d'un pixel correspondant dans ladite seconde image (202) est plus petite qu'une différence maximale entre les pixels dans ladite première (201) et les pixels correspondants dans ladite seconde image (202) et est égale à zéro ou dans une certaine gamme prédéfinie;
- prendre une image séparée (203) avec l'appareil photo (20) de l'objet placé sur la plate-forme (10) différente desdites première et seconde images (201, 202) et dans lesquelles l'éclairage de l'objet est optimisé pour obtenir une image réaliste et/ou avantageuse de l'objet; et
- créer un fichier d'image comprenant un canal alpha sur la base de ladite image séparée (203) et les valeurs de transparence obtenues desdites première et seconde images (201, 202),
**caractérisé en ce que** le bord de la plate-forme (10) en face à l'écran (30) pour l'éclairage d'arrière-plan a un chanfrein ou biseau (11) pour réduire les réflexions.

2. Procédé suivant la revendication précédente
comprenant les étapes de:
- tourner un ou les deux de l'appareil photo (20) et de la plate-forme (10) par rapport à l'autre autour d'un axe de rotation entre des séries d'images prises par l'appareil photo (20); une série d'images comprenant lesdites première et seconde images (201, 202) et, de préférence, ladite image séparée (203).

3. Procédé suivant au moins une des revendications 1 à 2
comprenant les étapes de:
- tourner la plate-forme (10) par rapport à l'appareil photo (20) et à un écran (30) autour d'un axe de rotation vertical de 10 degrés entre chacune d'une pluralité des séries d'images prises par l'appareil photo (20); une série d'images comprenant une première et une seconde image (201, 202) et une image séparée (203).
- où pour chacun de la pluralité des séries d'images un fichier d'image comprenant un canal alpha est crée sur la base de ladite image séparée (203) et les valeurs de transparence obtenues desdites première et seconde images (201, 202) de la série d'image respective.

4. Procédé suivant au moins une des revendications précédentes
comprenant l'étape d':
- éclairer un objet placé sur la plate-forme (10) par le dispositif d'éclairage, comprenant de préférence un flash, pendant que l'image séparée (203) d'un objet placé sur la plate-forme (10) est prise à l'aide de l'appareil photo (20).

5. Procédé suivant au moins une des revendications précédentes
comprenant l'étape de:
- tourner l'appareil photo (20) par rapport à la plate-forme (10) autour d'un axe de rotation, de préférence autour d'un axe de rotation horizontal, entre des séries d'images prises par l'appareil photo (20); une série d'images comprenant lesdites première et seconde images (201, 202) et, de préférence, ladite image séparée (203).

6. Procédé suivant au moins une des revendications précédentes
comprenant l'étape d':
- inverser les valeurs de transparence en soustrayant la valeur de transparence de 1, de sorte qu'une valeur inversée de 1 définit un avant-plan, un objet de préférence, et une valeur inversée de 0 définit l'arrière-plan.

7. Procédé suivant la revendication précédente
comprenant l'étape de:
- potentialiser les valeurs de transparence ou les valeurs de transparence inversées d'une valeur entière positive supérieure à 1, de préférence de 2.

8. Procédé suivant la revendication précédente
comprenant l'étape de:
- normaliser les valeurs de transparence potentialisées ou les valeurs de transparence inversées potentialisées sur une échelle de 0 à 1.

9. Procédé suivant au moins une des revendications précédentes
comprenant les étapes de:
- changer toutes les valeurs de transparence en dessous de la valeur seuil inférieure à la première valeur de transparence et/ou
- changer toutes les valeurs de transparence en dessus de la valeur seuil supérieure à la seconde valeur de transparence.

10. Procédé suivant au moins une des revendications précédentes
comprenant les étapes d':
- identifier un pixel de référence dans lesdites première et/ou seconde images (201, 202) appartenant à l'arrière-plan;
- identifier tous les pixels dans lesdites première et/ou seconde images (201, 202) comme pixels d'arrière-plan, qui ont une différence de valeur RVB s'écartant dans une gamme prédéfinie de la différence de valeur RVB entre le pixel de référence et un pixel correspondant dans l'autre desdites première et/ou seconde images (201, 202), et qui sont adjacents au pixel de référence et/ou adjacents à un autre pixel avec une différence de valeur RVB s'écartant dans une gamme prédéfinie de la différence de valeur RVB entre le pixel de référence et un pixel correspondant dans l'autre desdites première et/ou seconde images (201, 202).

11. Un appareil (1) pour obtenir un fichier d'image comprenant un canal alpha,
comprenant
- une plate-forme transparente (10) avec une section transversale ronde, ovale, elliptique ou autrement courbée, offrant une surface pour un objet;
- un appareil photo (20) focalisant un objet placé sur la plate-forme (10);
- un écran (30) adapté pour éclairer l'arrière-plan d'un objet placé sur la plate-forme (10) avec au moins deux couleurs différentes par un écran (30), qui de préférence contient une pluralité des LEDs et qui contient des parties de l'écran (30 a, c) disposées sous et derrière la plate-forme (10), connectées par une partie de l'écran angulaire ou courbée (30b) pour obtenir un éclairage continu de l'arrière-plan;
- une unité de traitement (40) raccordée à l'appareil photo (20);
- une unité de commande (50) connectée à l'appareil photo (20) et à l'écran (30); l'unité de commande étant adaptée pour synchroniser la prise des images d'un objet placé sur la plate-forme (10) avec l'appareil photo (20) avec l'éclairage de l'arrière-plan par l'écran (30) de sorte qu'une première image (201) d'un objet placé sur la plate-forme (10) soit prise par l'appareil photo (20) avec l'arrière-plan éclairé avec la première des - au moins deux - couleurs différentes et une seconde image (202) soit prise par l'appareil photo(20) avec l'arrière-plan éclairé avec la seconde des - au moins deux - couleurs différentes;
- l'unité de traitement (40) étant adaptée pour créer des valeurs de transparence entre une première valeur de transparence pour un pixel transparent et une seconde valeur de transparence pour un pixel non-transparent à partir desdites première et seconde images (201, 202);
- où un pixel a la première valeur de transparence, quand une différence entre une valeur RVB d'un pixel dans ladite première image (201) et une valeur RVB d'un pixel correspondant dans ladite seconde image (202) correspond à la différence maximale entre les valeurs RVB des pixels dans ladite première (201) et les pixels correspondants dans ladite seconde image (202);
- où un pixel a la deuxième valeur de transparence, quand une différence entre une valeur RVB d'un pixel dans ladite première image (201) et une valeur RVB d'un pixel correspondant dans ladite seconde image (202) est plus petite qu'une différence maximale entre les pixels dans ladite première (201) et les pixels correspondants dans ladite seconde image (202) et est égale à zéro ou dans une certaine gamme prédéfinie;
- l'unité de commande (50) étant adaptée pour initier la prise d'une image séparée (203) avec l'appareil photo (20) d'un objet placé sur la plate-forme (10) différente desdites première et seconde images (202) et dans lesquelles l'éclairage de l'objet est optimisé pour obtenir une image réaliste et/ou avantageuse de l'objet; et
- l'unité de traitement (40) étant adaptée pour créer un fichier d'image comprenant un canal alpha sur la base de ladite image séparée (203) et les valeurs de transparence obtenues desdites première et seconde images (201, 202),
**caractérisé en ce que** le bord de la plate-forme (10) en face à l'écran (30) pour l'éclairage d'arrière-plan a un chanfrein ou biseau (11) pour réduire les réflexions.

12. Un appareil (1) suivant la revendication précédente
où l'un ou les deux de l'appareil photo (20) et de la plate-forme (10) étant rotatif par rapport à l'autre grâce à un mécanisme de rotation autour d'un axe de rotation;
et où le mécanisme de rotation est connecté à l'unité de commande (50) et l'unité de commande (50) est adaptée pour initier une rotation relative entre l'appareil photo et la plate-forme entre des séries d'images prises par l'appareil photo (20) et la plate-forme (10) entres des séries d'images prises par l'appareil photo (20); une série d'images lesdites première et seconde images (201, 202) et, de préférence, ladite image séparée (203).

13. Un appareil (1) suivant au moins une des
revendications précédentes 11 - 12
comprenant un dispositif d'éclairage, comprenant de préférence un flash, pour éclairer l'objet placé sur la plate-forme (10), le dispositif d'éclairage étant connecté à l'unité de commande (50);
et où l'unité de commande (50) est adaptée pour synchroniser la prise de l'image séparée (203) d'un objet placé sur la plate-forme (10) à l'aide de l'appareil photo (20) avec un éclairage par le dispositif d'éclairage.

14. Un appareil (1) suivant au moins une des
revendications précédentes 11 - 13
comprenant un dispositif de maintien (80) pour l'appareil photo (20) comprenant un cadre de rotation (90) étant monté sur un support rotatif autour d'un axe de rotation du cadre, où le support est monté sur un élément de base rotatif autour d'un axe de rotation du support qui est orthogonal à l'axe de rotation du
cadre; et où un support du cadre de rotation (90) est adapté pour accueillir un appareil photo (20) avec un axe optique d'une lentille de l'appareil photo (20) étant identique à l'axe de rotation du cadre.
